# EUROPÄISCHE PATENTANMELDUNG

(11) **EP 4 574 465 A1**
(43) Veröffentlichungstag der Anmeldung: **25.06.2025**
(21) Anmeldenummer: 24214061.4
(22) Anmeldetag: 20.11.2024
(51) Int. Cl.: B60C 11/24, B60C 23/04

(54) **VERFAHREN ZUR BESTIMMUNG EINES OPTIMALEN ZEITPUNKTES FÜR EINEN POSITIONSWECHSEL VON REIFEN EINES FAHRZEUGS**

(30) Priorität: 20.12.2023 DE 102023135950
(71) Anmelder: Continental Reifen Deutschland GmbH, 30175 Hannover (DE)
(72) Erfinder: Aslan, Valid, 30175 Hannover (DE); Niss, Torsten, 30175 Hannover (DE); Dr. Kiani, Amin, 30175 Hannover (DE); Dr. Trujillo Martinez, Mauricio, 30175 Hannover (DE)
(74) Vertreter: Continental Corporation

(57) **Zusammenfassung**

Verfahren zur Bestimmung eines optimalen Zeitpunktes für einen Positionswechsel von Reifen (4) eines Fahrzeugs (1), umfassend
- Ermitteln eines Zusammenhangs zwischen einer Laufleistung und einer Profiltiefe für einen Reifen (4) auf einer ersten Position und einen Reifen (4) auf einer zweiten Position;
- Ermitteln einer erwarteten Restlebensdauer für beide Reifen (4) in Abhängigkeit von einem Zeitpunkt für einen Positionswechsel und
- Minimieren der Differenz aus der erwarteten Restlebensdauer für beide Reifen (4) in Abhängigkeit von dem Zeitpunkt für einen Positionswechsel der Reifen (4).

## Beschreibung

Fahrzeugreifen erfahren während der Benutzung Verschleiß, wobei auch ein quer zu Lauffläche ungleichmäßiger Abrieb auftreten kann. Ursachen dafür können in hohen Lasten, im Fahrverhalten und im Straßenbelag liegen. Tramline wear beispielsweise kann abhängig von der Position des Reifens am Fahrzeug auftreten, wobei die inneren und äußeren Schultern des Reifens sich stärker als gewöhnlich abnutzen.

Bei Nutzfahrzeugen, mit Doppelbereifung weisen die Reifen auf derselben Achse teilweise einen unterschiedlichen Abrieb auf. Somit weisen sie auch eine unterschiedliche Lebensdauer auf und müssen zu unterschiedlichen Zeitpunkten getauscht werden. Typischerweise werden jedoch alle Reifen auf einer Achse getauscht, wenn einer der Reifen seine minimale Profiltiefe erreicht hat. Dies hat zur Folge, dass Reifen zu früh vom Fahrzeug genommen werden.

Um dem entgegenzuwirken, werden teilweise die Reifen auf unterschiedlichen Positionen miteinander getauscht, bevor einer der Reifen seine minimale Profiltiefe erreicht hat. Dies ist jedoch mit einem erheblichen Inspektionsaufwand verbunden.

Es ist eine Aufgabe der vorliegenden Erfindung, ein Verfahren zur Bestimmung eines optimalen Zeitpunktes für einen Positionswechsel von Reifen eines Fahrzeugs anzugeben, das möglichst weitgehend automatisiert ausführbar ist und mit dem sich Fahrzeugreifen möglichst bis zu ihrer minimalen Profiltiefe fahren lassen.

Diese Aufgabe wird gelöst mit dem Gegenstand des unabhängigen Anspruchs. Vorteilhafte Ausführungsformen und Weiterbildungen sind Gegenstand der Unteransprüche.

Gemäß einem Aspekt der Erfindung wird ein Verfahren zur Bestimmung eines optimalen Zeitpunktes für einen Positionswechsel von Reifen eines Fahrzeugs angegeben. Das Fahrzeug umfasst das Ermitteln eines Zusammenhangs zwischen einer Laufleistung und einer Profiltiefe für einen Reifen auf einer ersten Position und einen Reifen auf einer zweiten Position. Ferner umfasst es das Ermitteln einer erwarteten Restlebensdauer für beide Reifen in Abhängigkeit von einem Zeitpunkt für einen Positionswechsel. Ferner umfasst das Verfahren das Minimieren der Differenz aus der erwarteten Restlebensdauer für beide Reifen in Abhängigkeit von dem Zeitpunkt für einen Positionswechsel der Reifen.

Unter einer Position eines Reifens wird dabei die Position verstanden, an der er auf einer Achse des Fahrzeugs montiert ist. Ferner wird darunter seine Laufrichtung verstanden. Der Zeitpunkt für einen Positionswechsel entspricht einer Profiltiefe, bei der der Positionswechsel vorgenommen wird. Insofern kann der Begriff des Zeitpunktes eines Positionswechsels synonym zum Begriff der Profiltiefe beim Positionswechsel verstanden werden.

Gemäß dem Verfahren wird zum einen eine Restlebensdauer der Reifen prognostiziert und zum anderen die Differenz aus der erwarteten Restlebensdauer für beide Reifen in Abhängigkeit von dem Zeitpunkt des Positionswechsels als Zielfunktion mit Hilfe eines Optimierungsalgorithmus minimiert.

Das Verfahren hat den Vorteil, dass durch den optimierten Positionswechsel der Fahrzeugreifen die Profiltiefe für beide Reifen optimal ausgenutzt wird. Beide Reifen erreichen die minimale Profiltiefe möglichst zur selben Zeit. Ein Austausch beider Reifen, wenn einer von ihnen die minimale Profiltiefe erreicht hat, hat somit nicht zur Folge, dass ein noch brauchbarer Reifen vorzeitig entfernt wird. Dies ist besonders nachhaltig und spart darüber hinaus Kosten und Zeit, da Serviceintervalle entsprechend optimiert geplant werden können.

Das Verfahren kann für eine Mehrzahl von Reifenpaaren eines Fahrzeugs durchgeführt werden bzw. gleich für mehr als zwei Reifen durchgeführt werden. Auf diese Weise ist es möglich, verschiedene Partner für einen Positionswechsel in Betracht zu ziehen und die geeignetsten Reifenpaare auszuwählen.

Das Verfahren kann während des Betriebs des Fahrzeugs von einer im Fahrzeug angeordneten Recheneinheit ausgeführt werden. Insbesondere kann der Schritt des Minimierens der Differenz aus der erwarteten Restlebensdauer für beide Reifen in Abhängigkeit von dem Zeitpunkt für einen Positionswechsel der Reifen als on board-Service ausgeführt werden. Der Zusammenhang zwischen einer Laufleistung und einer Profiltiefe für einen Reifen kann in Form eines Modells zu Grunde gelegt werden.

Alternativ ist es auch möglich, das Verfahren teilweise oder vollständig auf einer externen Recheneinheit und insbesondere in der Cloud auszuführen.

Gemäß einer Ausführungsform der Erfindung erfolgt beispielsweise das Ermitteln des Zusammenhangs zwischen der Laufleistung und der Profiltiefe für einen Reifen auf einer ersten Position und einen Reifen auf einer zweiten Position mittels Testfahrten. Alternativ oder zusätzlich können dafür Simulationen genutzt werden.

Die durch Testfahrten und/oder Simulationen gewonnenen Daten können durch maschinelles Lernen auf bislang nicht einbezogene Strecken erweitert werden. Die Bestimmung des optimalen Zeitpunktes für einen Positionswechsel der Reifen ist unabhängig von der gewählten Methode zum Ermitteln des Zusammenhangs zwischen der Laufleistung und der Profiltiefe der Reifen.

Dabei kann insbesondere auch die Position, auf der ein Reifen montiert ist, berücksichtigt werden. Insbesondere kann der Zusammenhang zwischen der Position eines Reifens und dem Abrieb, insbesondere einem ungleichmäßigen Abrieb, gelernt werden.

Das Verfahren hat den Vorteil, dass es einfach ausführbar ist und keine Übertragung großer Datenmengen erfordert.

Das Verfahren liefert zuverlässig einen Zusammenhang zwischen der Laufleistung und der Profiltiefe für einen Reifen, der anschließend der Ermittlung des optimalen Zeitpunkts für einen Positionswechsel zugrunde gelegt werden kann.

Gemäß einem Aspekt der Erfindung wird ein Computerprogrammprodukt angegeben, umfassend Befehle, die bei der Ausführung des Programms durch einen Computer diesen veranlassen, das beschriebene Verfahren durchzuführen. Dabei kann es sich insbesondere, zumindest in Teilen, auch um eine Web- bzw. Cloudanwendung handeln.

Gemäß einem weiteren Aspekt der Erfindung wird ein computerlesbares Medium angegeben, umfassend Befehle, die bei der Ausführung durch einen Computer diesen veranlassen, das beschriebene Verfahren durchzuführen.

Ausführungsformen der Erfindung werden im Folgenden anhand schematischer Zeichnungen beispielhaft beschrieben.
- Figur 1: zeigt ein Verfahren gemäß einer Ausführungsform der Erfindung zur Bestimmung eines optimalen Zeitpunkts für einen Positionswechsel von Fahrzeugreifen;
- Figur 2: zeigt schematisch ein Fahrzeug mit mehreren Reifen, deren Positionen gemäß dem anhand von Figur 1 beschriebenen Verfahren gewechselt werden können;
- Figur 3: zeigt die erwartete Restlebensdauer für zwei Fahrzeugreifen, die verhältnismäßig früh getauscht wurden;
- Figur 4: zeigt die erwartete Restlebensdauer für zwei Fahrzeugreifen, die verhältnismäßig spät getauscht wurden und
- Figur 5: zeigt die erwartete Restlebensdauer für zwei Fahrzeugreifen, die zu einem optimalen Zeitpunkt getauscht wurden.

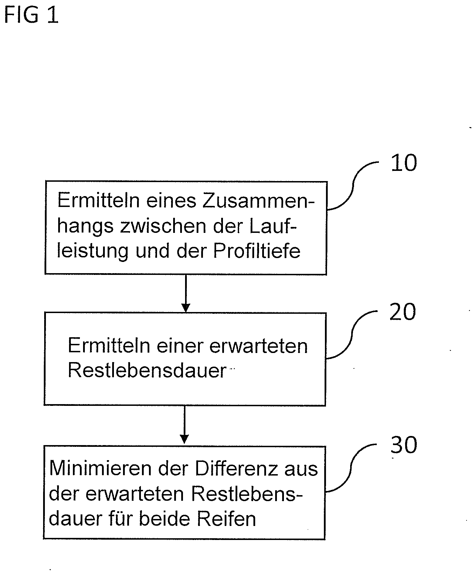

Figur 1 zeigt Schritte eines Verfahrens zur Bestimmung eines optimalen Zeitpunktes für einen Positionswechsel von Reifen eines Fahrzeugs gemäß einer Ausführungsform der Erfindung.

Zunächst wird ein Zusammenhang zwischen einer Laufleistung und einer Profiltiefe für einen Reifen auf einer ersten Position und einen Reifen auf einer zweiten Position ermittelt. Dieser Schritt 100 kann beispielsweise mithilfe eines selbstlernenden Modells durchgeführt werden und der Zusammenhang zwischen der Laufleistung der Profiltiefe kann gespeichert und zu einem späteren Zeitpunkt zur Verfügung gestellt werden. Der Schritt 100 kann vorab auf einer Recheneinheit außerhalb des Fahrzeugs und insbesondere auch für eine Flotte mit einer Vielzahl von Fahrzeugen erfolgen.

In einem Schritt 20 wird eine erwartete Restlebensdauer für beide Reifen ermittelt. Die erwartete Restlebensdauer hängt von der Position des Reifens ab und damit auch von dem Zeitpunkt für einen Positionswechsel der Reifen. Werden die Reifen sehr spät getauscht, ist der Reifen auf der stärker beanspruchten Position bereits derart weit abgefahren, dass er ersetzt werden muss, bevor der andere Reifen seine minimale Profiltiefe erreicht hat. Werden die Reifen sehr früh getauscht, so verbleibt ebenfalls einer der Reifen deutlich länger auf der stärker beanspruchten Position als der andere Reifen und die Reifen sind zu unterschiedlichen Zeitpunkten abgefahren.

In einem Schritt 30 wird daher die Differenz aus der erwarteten Restlebensdauer für beide Reifen minimiert.

Insbesondere die Schritte 20 und 30 können durch eine Recheneinheit eines Fahrzeugs im Fahrzeug selbst ausgeführt werden.

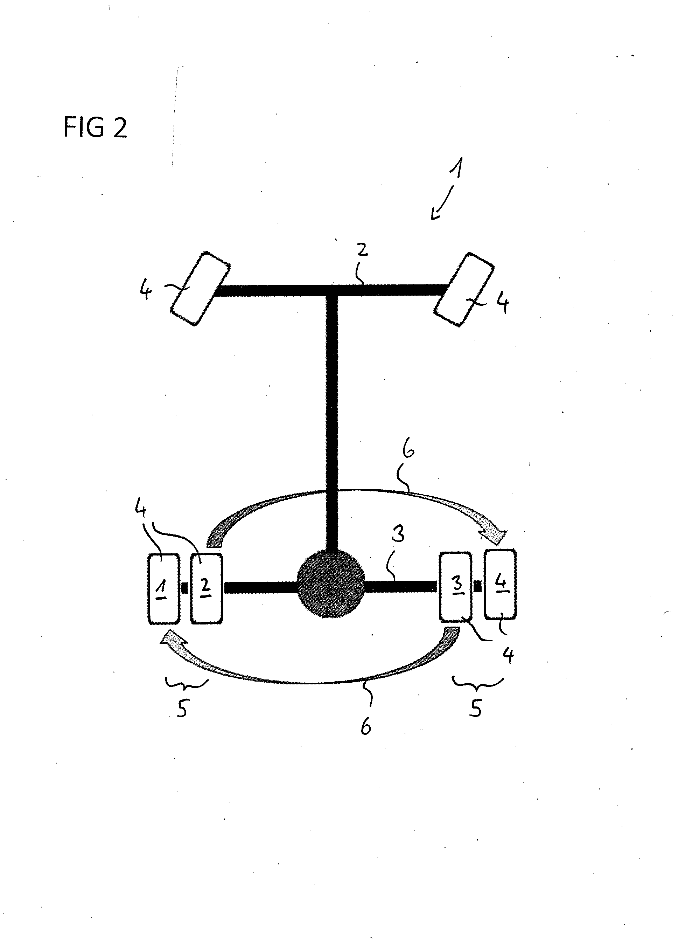

Figur 2 zeigt ein Fahrzeug 1 mit einer Vorderachse 2 und einer Hinterachse 3 und darauf angeordneten Reifen 4. Auf der Vorderachse 2 sind lediglich einzelne Reifen 4 montiert, während auf der Hinterachse 3 Paare 5 von Reifen 4 montiert sind. Dadurch ergeben sich auf der Hinterachse 3 die Positionen 1, 2, 3 und 4.

Wie durch die Pfeile 6 angedeutet, können Reifen 4 zu dem ermittelten optimalen Zeitpunkt getauscht werden, um eine gleichmäßigere Abnutzung untereinander zu erzielen.

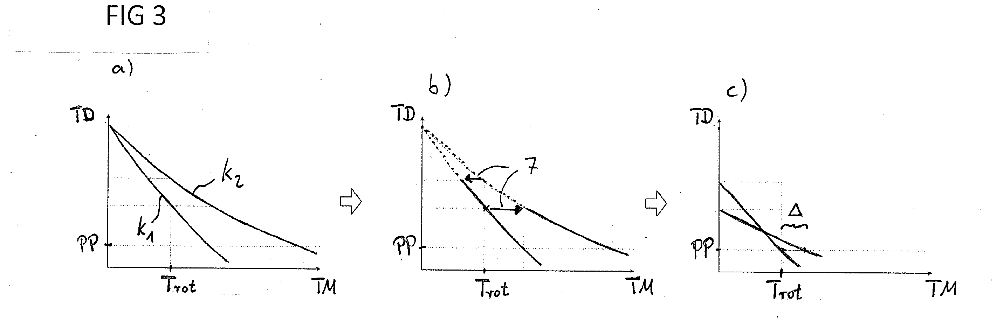

Figur 3 zeigt drei Diagramme, in denen jeweils die Profiltiefe TD (thread depth) gegen die Laufleistung TM (tire mileage) eines Reifens für zwei Reifen auf unterschiedlichen Positionen aufgetragen ist. Figur 3 illustriert dabei einen Fall, in dem ein Positionswechsel von Reifen frühzeitig vorgenommen wird.

Figur 3a zeigt den ermittelten Zusammenhang zwischen einer Laufleistung und einer Profiltiefe für einen Reifen auf einer ersten Position (Kurve k1) und einen Reifen auf einer zweiten Position (Kurve k2). Die minimale Profiltiefe ist mit PP (pull point) gekennzeichnet. Der Zeitpunkt bzw. die Laufleistung, zu dem ein Positionswechsel vorgenommen wird, ist mit Tᵣₒₜ bezeichnet.

Figur 3b illustriert die weitere Entwicklung der Reifen nach einem Positionswechsel. Zum Zeitpunkt Tᵣₒₜ werden zwei Reifen getauscht. Wie durch die Pfeile 7 angedeutet, wechseln die Reifen dabei auf die jeweils andere Kurve.

Figur 3c zeigt die Differenz aus der erwarteten Restlebensdauer für beide Reifen, die sich aus dem Positionswechsel ergibt. Die Differenz ergibt sich aus den beiden Laufleistungen, bei denen die Kurven die minimale Profiltiefe PP erreichen, und ist durch das Verschieben der beiden Kurven bis auf den Nullpunkt der x-Achse illustriert. Diese Differenz ist mit Δ bezeichnet.

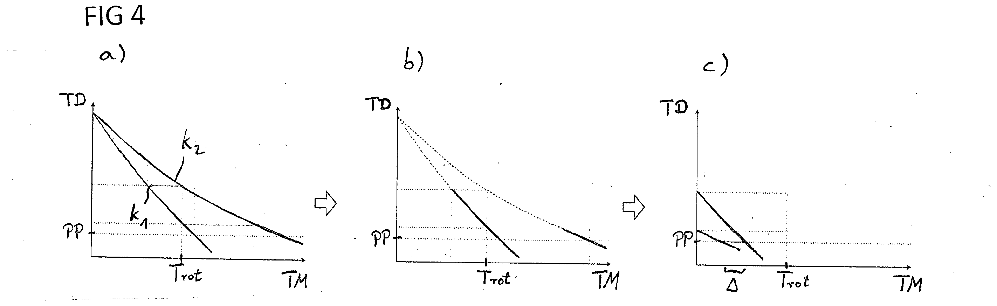

Figur 4 illustriert in den Figuren 4a bis 4c analog einen Fall, bei dem der Positionswechsel von Reifen spät vorgenommen wurde.

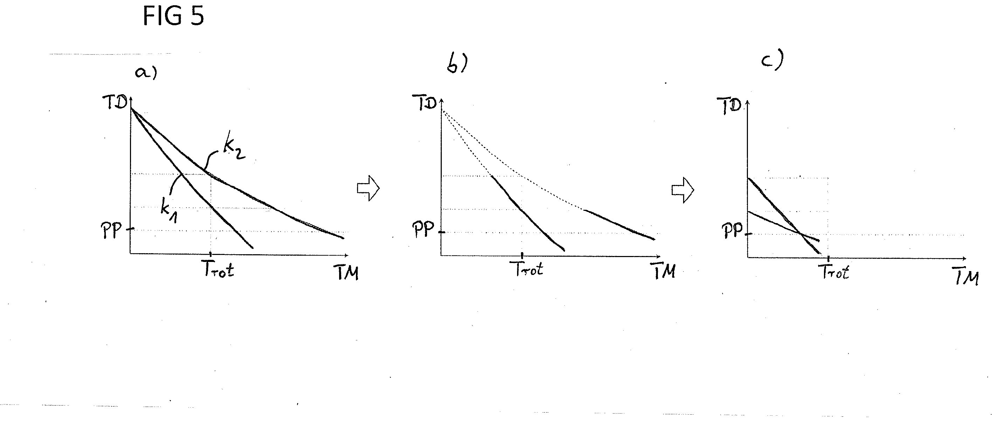

Figur 5 illustriert in den Figuren 5a bis 5c analog den Fall, dass der Positionswechsel zum optimalen Zeitpunkt vorgenommen wurde. Die Differenz Δ ist hier gleich null, somit haben beide betrachteten Reifen zum selben Zeitpunkt ihre minimale Profiltiefe erreicht und müssen ausgetauscht werden.

### Bezugszeichenliste

- 1: Fahrzeug
- 2: Vorderachse
- 3: Hinterachse
- 4: Reifen
- 5: Reifenpaar
- 6: Pfeil
- 7: Pfeil
- 10: Schritt
- 20: Schritt
- 30: Schritt

## Patentansprüche

1. Verfahren zur Bestimmung eines optimalen Zeitpunktes für einen Positionswechsel von Reifen (4) eines Fahrzeugs (1), umfassend
- Ermitteln eines Zusammenhangs zwischen einer Laufleistung und einer Profiltiefe für einen Reifen (4) auf einer ersten Position und einen Reifen (4) auf einer zweiten Position;
- Ermitteln einer erwarteten Restlebensdauer für beide Reifen (4) in Abhängigkeit von einem Zeitpunkt für einen Positionswechsel und
- Minimieren der Differenz aus der erwarteten Restlebensdauer für beide Reifen (4) in Abhängigkeit von dem Zeitpunkt für einen Positionswechsel der Reifen (4).

2. Verfahren nach Anspruch 1,
wobei das Verfahren für eine Mehrzahl von Reifenpaaren (5) eines Fahrzeugs (1) durchgeführt wird.

3. Verfahren nach Anspruch 1 oder 2,
wobei das Ermitteln des Zusammenhangs zwischen der Laufleistung und der Profiltiefe für einen Reifen (4) auf einer ersten Position und einen Reifen (4) auf einer zweiten Position mittels Testfahrten erfolgt.

4. Verfahren nach einem der Ansprüche 1 bis 3,
wobei das Ermitteln des Zusammenhangs zwischen der Laufleistung und der Profiltiefe für einen Reifen (4) auf einer ersten Position und einen Reifen (4) auf einer zweiten Position mittels Simulationen erfolgt.

5. Verfahren nach Anspruch 3 oder 4,
wobei die durch Testfahrten und/oder Simulationen gewonnenen Daten durch maschinelles Lernen auf bislang nicht einbezogene Strecken erweitert werden.

6. Verfahren nach einem der Ansprüche 1 bis 5,
wobei das Verfahren während des Betriebs des Fahrzeugs (1) von einer im Fahrzeug (1) angeordneten Recheneinheit ausgeführt wird.

7. Computerprogrammprodukt, umfassend Befehle, die bei der Ausführung des Programms durch einen Computer diesen veranlassen, das Verfahren gemäß einem der Ansprüche 1 bis 6 durchzuführen.

8. Computerlesbares Medium, umfassend Befehle, die bei der Ausführung durch einen Computer diesen veranlassen, das Verfahren gemäß einem der Ansprüche 1 bis 6 durchzuführen.
